# EUROPEAN PATENT SPECIFICATION

(11) **EP 1 322 065 B1**
(45) Date of publication and mention of the grant of the patent: **27.07.2005**
(21) Application number: 02293094.5
(22) Date of filing: 13.12.2002
(51) Int. Cl.: H04L 12/24

(54) **Management of OSI layer-3 data network entities**
Verwaltung von OSI-Schicht-3 Datennetzeinheiten
Gestion de' entités de réseau à données d' OSI-couche 3

(30) Priority: 19.12.2001 US 21505
(43) Date of publication of application: 25.06.2003
(73) Proprietor: Alcatel Canada Inc., Kanata, Ontario K2K 2E6 (CA)
(72) Inventor: Kirk, Cindy, Ottawa, Ontario K1S 2P6 (CA); Popescu, Eniko, Ottawa, Ontario K2K 2S4 (CA); Bolder, Ronald Scott, Nepean, Ontario K2J 4C7 (CA); Timmerman, Craig Ellirt, Ottawa, Ontario K1Y 1J3 (CA)
(74) Representative: Feray, Valérie

(56) References cited:
- US-A- 6 115 393

## Description

The invention relates to data network management, and in particular to methods of managing Open Systems Interconnection (OSI) Layer-3 data network entities.

Public data transport networks such as the Internet were initially designed to convey data encapsulated into what are known as Protocol Data Units (PDUs). Each PDU contains header information and a payload. The PDU represents a self contained entity holding routing information in the header to route the PDU in the data transport network towards a intended destination specified therein.

The early development of the Internet was driven by a requirement of providing connectionless data transport. Connectionless data transport refers to the conveying of PDUs towards an intended destination data network node without specifying a route through the data transport network.

The connectionless transport of data provides an inherent failure recovery. Each PDU is transported through the data transport network independently of any other PDU. The PDU is inspected at each data network node receiving thereof to determine a next hop to be used in forwarding the PDU towards the intended destination. The route taken by the PDU is sensitive to data link and/or data transport node failures. In performing routing decisions, the PDUs are routed around failures in the data transport network without necessitating redundant bandwidth and/or (physical) data links.

Initially the Internet traffic primarily consisted of best effort data traffic by which it is meant that the data network nodes in the data transport network try their best to forward a PDU towards an intended destination without any guarantees of delivery. In cases in which a PDU is traversing a large number of data links, as well as in the case in which the PDU is awaiting processing at a congested data network node, it is possible for the PDU to be discarded or delayed. Data transport protocols, such as the Transmission Control Protocol (TCP), are used to provide a reliable data transport over unreliable data transport equipment. Although reliable, TCP data transport does not make Quality-of-Service (QoS) provisions: discarded or delayed PDUs are not acknowledged to have been received, after a delay unacknowledged PDUs are retransmitted.

The paradigm of a data network path taken by PDUs as a "managed data network entity" does not make sense in this arrangement as PDUs are routed at every data network node and subsequence PDUs may not use the same data transport path in the data transport network by design.

Recent developments in the data telecommunications field as well as recent market drivers have made increasing demands for data services requiring reliable data transport with a higher QoS. Equipment failures have been reduced by implementing redundancy. It was also realized that the data transport path taken by PDUs in providing data transport in support of a data service is very important.

A large number of algorithms have been devised to use information about data network nodes and interconnecting data transport links to establish data transport paths having specific characteristics in supporting specific data services.

Algorithms have been developed to find the shortest path between two data network nodes in the data transport network. By a shortest path one refers to the shortest number of hops or physical data links to be traversed between source and destination data network nodes, or the shortest geographically traversed path between the data network nodes. These algorithms address the minimization of data processing delays and data transmission delays respectively. Other algorithms finding data transport paths attempt to optimize different aspects of data transport by assigning weights to data transport links as well as data transport nodes to optimize the chosen data transport path with respect to: data transport delay, data processing delays, jitter, bandwidth, redundant protection, etc.

Examples of routing protocols implementing path discovery algorithms include, between others: Routing Information Protocol (RIP) distance based routing, Open the Shortest Path First (OSPF), Intermediate System to Intermediate System (ISIS), Border Gateway Protocol (BGP), etc.

Connection oriented data transport technologies have also been devised to transport data in a fashion similar to circuit switching in which the establishment of a data transport path prior to data transmission involves at least some prior knowledge of the data transport network. Connection oriented data transport technologies include, but are not limited to the Multi-Protocol Label Switching (MPLS) protocol suite. MPLS embraces the "path as a data network entity" paradigm and particularly the "path as a manageable data network entity" paradigm.

Routers represent another data network entity used in providing data transport services. Routers originate with repeaters. Repeaters were data network nodes used to extend the physical reach of data transport networks by blindly copying PDUs across the connected data network domains. Repeaters evolved into gateways as logic was added to only selectively copy the PDUs across if the intended destination data network nodes for the copied PDUs were not attached to the data network domain from which the PDUs were received. Although gateways can be implemented as stand alone data network nodes, gateways are typically implemented integral to data switching nodes.

With the advent of routing protocols implementing path discovery algorithms, as mentioned above, the gateways evolved into routers. Standalone implementations of routers exist as well as virtual routers implemented in software running on data switching nodes.

Provisioning data transport services ensuring Quality-of-Service, requires the establishment of data transport paths. Data transport paths are established between routers. Typical router management for standalone router devices included the use of element management software. Element management techniques focuses on managing the router and the data transport paths associated with on a router by router basis. Performing router management using element management techniques suffers from a limited view of the data network resources. As opposed to data transport paths which are governed by standardized data transport protocols, routers have a vendor specific implementation using vendor and typically router specific element management tools. Therefore network management solutions providing data transport services at QoS guarantees require the skills of an analyst having experience in configuring multi-vendor routing equipment.

An example of a prior art network monitoring system corresponding to the preamble of the independent claims is disclosed US-A-6115 393. This system has a graphical protocol selection menu, in which a user first selects a protocol family and then the particular layer within that family.

One object of the present invention is to provide a network management system for providing comprehensive management of data transport paths and routers in support of Quality-of-Service guarantees.

More precisely, the invention provides a network management system as defined in independent claim 1
a network management logic programmed with comprising:
a human-machine interface for display of connectivity information;
characterised in that it further comprises
at least two view adapted to be panes displayed on the human-machine interface, a first view pane for displaying representations of OSI Layer 3 entities, and a second view pane for displaying representations of OSI Layer 2 entities, the OSI Layer 3 entities being provisioned over the OSI Layer 2 entities, so that
   the combination of the displayed information in the at least two view panes provides for presentation of OSI Layer 2 entities corresponding to selected OSI Layer 3 entities.

Thus, the advantages include an improved efficiency in the management, troubleshooting and provisioning of data transport paths.

In accordance with another aspect of the invention, a network management software application is provided as defined in independent claim 7. The network management software application comprises: network management logic; a human-machine interface whereby when said logic is executed in a computer, connectivity information, and is characterised in that is caused to display when said logic is executed in a computer, at least two view panes are caused to be displayed via the human-machine interface. A first view pane displays representations of OSI Layer 3 entities. A second view pane displays representations of OSI Layer 2 entities. The OSI Layer 3 entities are provisioned over the OSI Layer 2 entities.

The combination of the displayed information in the at least two view panes provides for concise presentation of OSI Layer 2 entities corresponding to selected OSI Layer 3 entities.

Futher embodiments according to the present invention are defined in the dependent claims 2-6 and 8-12.

The features and advantages of the invention will become more apparent from the following detailed description of the preferred embodiments with reference to the attached diagrams wherein:
FIG. 1 shows a schematic diagram showing OSI Layer-1 data transport elements as well as OSI Layer-3 data transport entities;
FIG. 2 shows a schematic diagram showing a derivation hierarchy of managed entity objects modeling data transport network elements in accordance with an exemplary embodiment of the invention;
FIG. 3 shows a schematic diagram showing a containment hierarchy of instantiated data transport managed entity objects in modeling the data transport network elements in accordance with an exemplary embodiment of the invention;
FIG. 4 shows a schematic diagram showing interconnected data transport network elements providing data transport for at least one data service provisioned via a data transport path;
FIG. 5 shows a schematic diagram showing, in accordance with a preferred embodiment of the invention, associations between managed entity object instances used in provisioning data transport paths;
FIG. 6 shows a schematic diagram showing in accordance with an exemplary implementation of the invention, a graphical user interface enabling an analyst to interact with displayed graphical entities representative of instances of data transport managed entity objects;
FIG. 7 shows a schematic diagram showing a progression in presenting connectivity information corresponding to a data transport path in accordance with another embodiment of the invention; and
FIG. 8 shows a schematic diagram showing a progression of displayed information in troubleshooting a OSI Layer-3 data transport path to determine OSI Layer-2 and -1 failed equipment in accordance with yet another embodiment of the invention.

It will be noted that in the attached diagrams like features bear similar labels.

### Detailed description of the embodiments

The Open Systems Interconnection (OSI) hierarchy specifies seven layers defining data transport functions performed by data transport protocols. Isolating data transport functions in different layers minimizes the impact of technological change. Of relevant importance herein are the first three layers.
OSI Layer-1 is also known as the Physical Layer concerning itself with physical data transport and in particular defines the characteristics of the hardware needed to carry out data transmissions. The hardware includes physical link cables, physical link optical fibers, free space physical links, etc. The physical link cables and/or physical link optical fibers connect to data ports. Each data port has physical transmitters and receivers including: signal drivers, laser modulators, microwave antennae, etc.

OSI Layer-2 is also known as the Data Link Layer concerning itself with reliable data transport across corresponding Layer-1 physical links. Layer-2 data transport protocols include: Asynchronous Transmission Mode (ATM), Frame Relay (FR), Packet-over-SONET (Synchronous Optical NETwork), Serial Line IP (SLIP), PPP, MAC, etc. Data network equipment includes nodes and interfaces having Layer-2 data transport protocol specific data ports. Data network ports may be configured to support more than one data transmission protocol either severally or in combination.

OSI Layer-3 is also known as the Network Layer concerning itself with the management of data connectivity end-to-end. The connectionless Internet Protocol (IP) and the connection oriented Multi-Protocol Label Switching (MPLS) protocol are Layer-3 routing protocols. The MPLS protocol may make use of IP technologies. Data transport paths and routers are OSI Layer-3 data transport entities. MPLS enabled routers a known as Label Switching Routers (LSR).

As mentioned above, for the original connectionless best effort data traffic, the idea of an ever changing data transport path as a manageable data network entity had little utility. Recently however, with the advent of connection oriented data transport technologies providing Quality-of-Service guarantees make the "data transport path as a manageable data network entity" paradigm a requirement. With data transport paths spanned between routers in a data transport network, management of router entities is also a requirement.

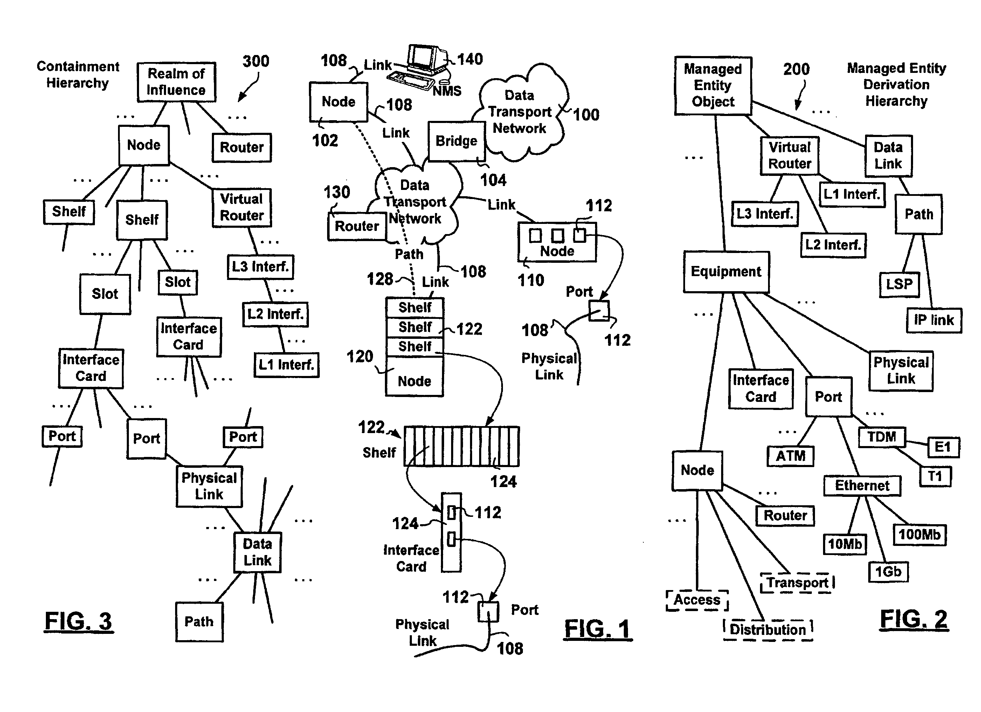

FIG. 1 is a schematic diagram showing data network elements implementing connected data transport networks.

Data network nodes 102,110,120 are physically interconnected, to form data transport networks 100, at the Open Systems Interconnection (OSI) Layer-1 via physical links 108. Data transport networks 100 may be bridged via bridge data network nodes 104 to enable data exchange therebetween. Connected data transport networks 100 can be grouped defining areas of focus and influence for the purposes of network management.

Physical links 108 provide OSI Layer-1 connectivity between data network nodes 102/104/110/120 physically conveying data for OSI Layer-2 data links between nodes 102/110/120 end-to-end. A Layer-2 data link may be provisioned over at least one physical link 108 - a specific sequence of physical data links 108 making up an OSI Layer-3 path 128. Routers 130 are used to steer data traffic in the data transport network 100.

For example, with respect to data switching nodes schematically shown in Fig. 1, a vendor may choose an integral device 110 implementation having a data switching processor and a group of ports 112, while another vendor may chose a customizable data switching node 120 implementation including: a switching fabric, an equipment rack divided into shelves, each shelf 122 having slot connectors for connection to physical interface cards, each physical interface card 124 having at least one port 112. Although, conceptually, the two the data switching nodes 110 and 120 provide the same data switching function, each implementation is adapted for a different environment: the former data switching node 110 is more adapted to enterprise solutions as a private data network node, perhaps also adapted to enable access to public data services; while the latter data switching node 120 is better adapted for high data throughput in the core of public data transport networks. Typically the former (110) implements a small number of data transport protocols while for the latter (120), data transport protocols are implemented on interface cards 124 and/or ports 112 - providing for a flexible capabilities deployment thereof. Routers, such as schematically shown in FIG. 1 at 130 may represent integral data network devices. Virtual routers (130) are integrated into data network nodes 102/104/110/120.

Network management and is typically performed with the aid of at least one Network Management System (NMS) 140 connected to at least one node 102 associated with a data transport network 100.

FIG. 2 is a schematic diagram showing, in accordance with an exemplary embodiment of the invention, a derivation hierarchy of managed entity objects modeling data transport network entities.

In support of management of the manageable data transport entities shown in Fig. 1, each manageable data transport entity is modeled in software via a corresponding managed entity objects using, for example, Object Oriented Programming techniques. Other modeling techniques may be used without departing from the spirit of the invention. The managed entity objects typically form a managed entity derivation hierarchy 200.

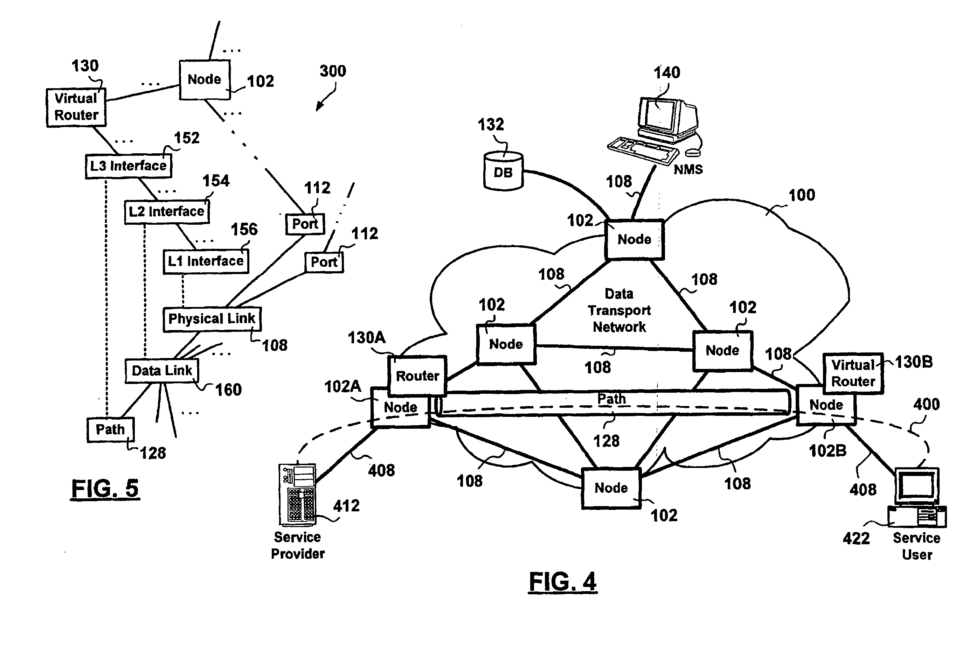

FIG. 3 is a schematic diagram showing, in accordance with an exemplary embodiment of the invention, a containment hierarchy of instances of managed data transport entity objects in modeling the data transport elements used.

In providing the network management function for data transport networks 100 in a realm of influence, data network management software applications are used to extract connectivity information from interconnected data network elements such as shown in Fig. 1. The network management software application may further be used to specify connectivity information in setting-up data services for example. A data network state, including connectivity information, service provisioning information, operational state information, etc., is captured in instances of managed entity objects (200), the instances of managed entity objects forming a containment hierarchy 300.

FIG. 4 is a schematic diagram showing connected data network elements implementing a data transport network 100 providing data transport for at least one data service 400 between a service provider node 412 and a service user node 422.

The service provider node 412 and the service user node 422 are connected to the data transport network 100, and in particular to edge nodes 102, via uplinks 408. Data network nodes 102 within data network 100 are interconnected by a physical data links 108 to provide data transport therebetween.

In order to provide Quality-of-Service in conveying data via the data transport network 100 between the service provider node 412 and the service user node 422, a data transport path 128 is provisioned between the edge nodes 102A and 102B. Data transport paths such as shown at 128 represent OSI Layer-3 entities and are supported by connection oriented data transport protocols.

Each data transport path 128 traverses a group of nodes 102 in data transport network 100. PDUs sent via the data transport path 128, tunnel through the data transport network 100 along the established data transport path 128 between the end nodes 102 thereof. PDU processing efficiencies are derived from the tunneling thereof through the data transport network 100 reducing PDU processing overheads at data network nodes 102 along the data transport path 128. The routers 130 are used to steer data traffic associated with the data service 400 onto the data transport path 128.

FIG. 5 is a schematic diagram showing, in accordance with a preferred embodiment of the invention, associations between managed entity object instances used in provisioning data transport paths.

Irrespective of the implementation of a router 130 as a standalone device or integrated with a data transport node 102, each router 130 is associated with a data transport node 102. Routers 130 concern themselves with the processing of PDUs and in particular with the processing of routing information associated with the first three OSI layers stored in PDU headers.

Management and provisioning data structures are defined at each OSI Layer. Such data structures include what are know as router interfaces. In order for a router 130 to steer data traffic, the router 130 uses router interfaces. At each layer connectivity is achieved via the router interfaces and the router interfaces form a hierarchy.

A Layer-3 logical interface 152 is used for each data transport path 128 associated therewith. The Layer-3 logical interface 152 has an associated Layer-3 IP specification. The IP specification of the Layer-3 logical interface 152 is used by IP routing protocols, the MPLS protocol and static routing to specify connectivity between routers 130.

Typically, each Layer-3 logical interface 152 may have one of two configurations, although the invention is not limited thereto. A first Layer-3 logical interface 152 configuration is said to be "numbered". A numbered Layer-3 logical interface 152, includes an IP ADDRess (ADDR) in the IP specification thereof. The second Layer-3 logical interface 152 configuration is said to be "unnumbered". An unnumbered Layer-3 logical interface 152, does not include an IP ADDR in the IP specification thereof. The use of unnumbered configurations for Layer-3 logical interfaces 152 provides for the conservation of IP addresses which is a concern considering the increasing demand for data transport services. A sub-layer interface is further used to specify Layer-2 and -1 connectivity.

A Layer-2 logical interface 154, also referred to as a link layer-2 interface, is used as a sub-layer interface. Link layer interfaces 154 are tailored according to the data transport protocol used for each corresponding data link 162 used. Exemplary data transport protocols used include, but are not limited to: ATM, FR, etc. Corresponding layer-2 interface 154 specifications include Virtual Path Identifiers (VPI) / Virtual Circuit Identifiers (VCI) and Data Link Connection Identifier (DLCI) respectively. PPP session specification may also be used to configure the Layer-2 interface 154.

A Layer-1 logical interface 156, also referred to as physical layer-2 interface, is also used as a sub-layer interface. Physical layer interfaces 156 are tailored according to the data transport used as well as the port 112 configuration used for each corresponding physical link 108 used. Exemplary data ports 112 used include, but are not limited to: ATM, FR, POS, Gigabit Ethernet, Ethernet (ports), etc.

Data transport paths 128 include, but are not limited to: Layer-3 IP links provisioned using IP protocol, IP routing protocols and related technologies as well as Label Switched Paths (LSP) provisioned using the MPLS protocol. Ultimately the configuration of each IP link determines what types of PDUs can be conveyed over the IP link and therefore what data services can be provisioned. Exemplary IP link configurations provide support for IP forwarding, MPLS/IP forwarding, MPLS only, etc.

The specification of an IP link is used to configure the above mentioned router interfaces and represents logical IP connectivity between routers 130 provisioning a data transport path 128. Only one IP link can be defined between a pair of router Layer-3 interfaces. One or more sub-layer interfaces (of the same type) may be associated with a router Layer-3 interface 152. More than one IP link can be used between any two given routers 130 and each IP link may span more than one hop. An example of a multi-hop IP link may be provisioned over an ATM Virtual Non-Cross Connect layer-2 path. When using ATM as the Layer-2 data transport protocol, the IP link specification may employ only one VPI/VCI pair. When using POS as the Layer-2 data transport protocol, the IP link may use multiple physical links in parallel with multiple (L1) ports being specified for each router interface (L3). An LSP may span over more than one IP link. LSPs may be limited to unidirectional directional data transport.

Each IP link has two endpoints. For the purposes of network management, IP links fall into at least three categories: Point-to-Point, Point-to-IP, Point-to-Subnet, etc. In provisioning data transport paths 128, the first two IP links are used to establish point-to-point connectivity between routers 130, while the later is used provide support for broadcasting data services. Each Point-to-Point IP link is used to configure router interfaces of both ends of the IP link associated with managed routers 130 in a realm of influence of the network management solution. If one of the routers 130 at an end of an IP link is not in the realm of management of the network management solution, then a Point-to-IP IP link is used only specifying the IP ADDR of the unmanaged router 130.

Further classification of IP links include: peer IP links used to establish connectivity between a router 130 within data transport network 100 to a bridge 104, a service provider (412) router or a service user (422) router; access IP links used to establish connectivity between a service provider (412) router and a service user (422) router; and network IP links between managed routers 130.

The Layer-3 IP link hides the layer-2 complexity as the Layer-3 logical connectivity is provisioned over a single or multi-hops as well as Layer-2 paths. The specification of an IP link does not configure IP routing protocols (when enabled) but it does configure the MPLS protocol. Routing protocols used by routers 130 are configured separately and include but is not limited to the use of element management tools.

The IP link/data transport path 128 establishment further includes the specification of QoS parameters such as, but not limited to: delay tolerance, jitter tolerance, PDU loss tolerance, forwarding priority, etc.

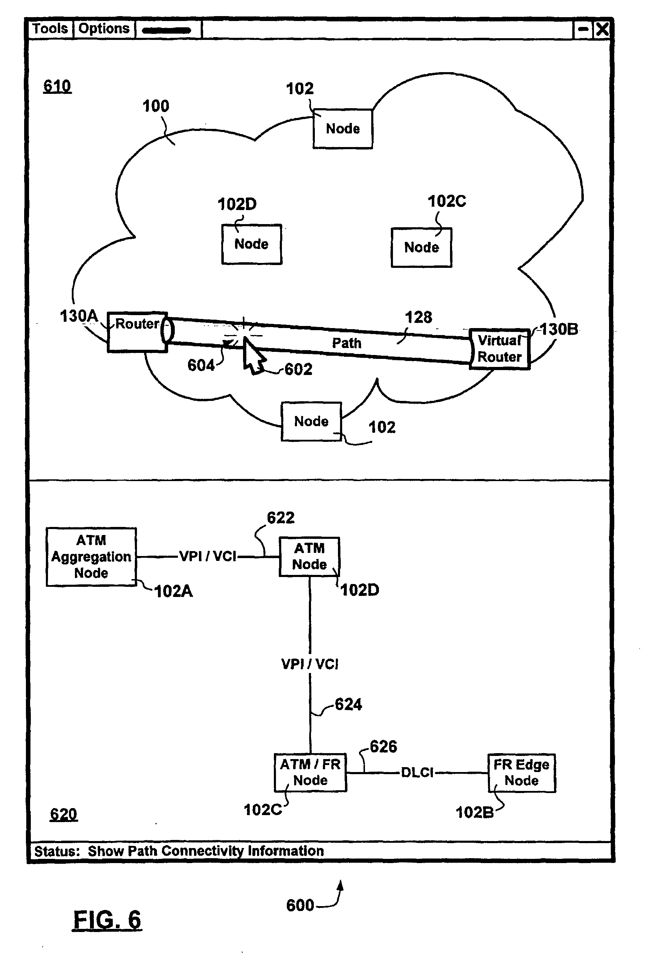

FIG. 6 is a schematic diagram showing, in accordance with an exemplary embodiment of the invention, a graphical user interface enabling an analyst to interact with displayed graphical entities representative of instances of data transport managed entity objects.

Preferably a display interface 600 is presented to the analyst. The display interface is divided in at least two view panes.

A first view pane 610 shows at least a selected portion of the data transport network 100 in accordance to a Layer-3 representation thereof. Routers 130 steering data traffic onto the data transport path 128 are shown as well as the data path 128 itself. A pipe/tunnel spanned therebetween routers 130 represents the data transport path 128. Routers 130A and 130B may either be implemented as stand alone physical data transport equipment or implemented in software/firmware of a data transport node such as the virtual router 130B. In accordance to either implementation, the routers 130 are associated with data transport nodes 102 in the data transport network 100. Other nodes 102 bearing Layer-3 IP ADDRs are shown as part of the network management solution and further provide a visual context for the routers 130 and data transport path 128.

The data transport network 100 itself is a Layer-3 entity to the extent that it has an IP network address ###.###.###.0 and may be displayed to provide a visual context.

The data service 400 provisioned over the Layer-3 path 128 is not shown because it is a higher OSI layer entity. The service provider 412 and the service user 422 are not shown even though they are Layer-3 entities by bearing IP ADDRs because these nodes are not typically in the realm of influence of the network management solution.

These Layer-3 representations besides showing the routers 130, the end nodes 102 and the data transport path 128 provide very little other information about. Although the information is limited, such representation is preferred eliminating unnecessarily complicating details associated with the lower OSI Layer-2 and -1 data transport equipment provisioning the data transport path 128.

A second view pane 620 shows Layer-2 connectivity information associated with selected 604 Layer-3 entities in pane 610 - for example the data transport path 128. The selection is typically made via the use of pointing capabilities of the NMS 140 system.

The Layer-2 connectivity information includes the link layer interface configuration specifications. Displayed in FIG. 6 is a multi-hop IP link providing data transport for data transport path 128. The multi-hop link specifies: the VPI/VCI for a hop 622 between ATM nodes 102A and 102D, the VPI/VCI for a hop 624 between ATM nodes 102D and 102C, and DLCI for a hop 626 between FR nodes 102C and 102B. It will be noted that node 102C is a gateway providing data transport protocol translation between ATM and FR. Optionally a data transport bandwidth allocated to the data transport path 128 may also be shown.

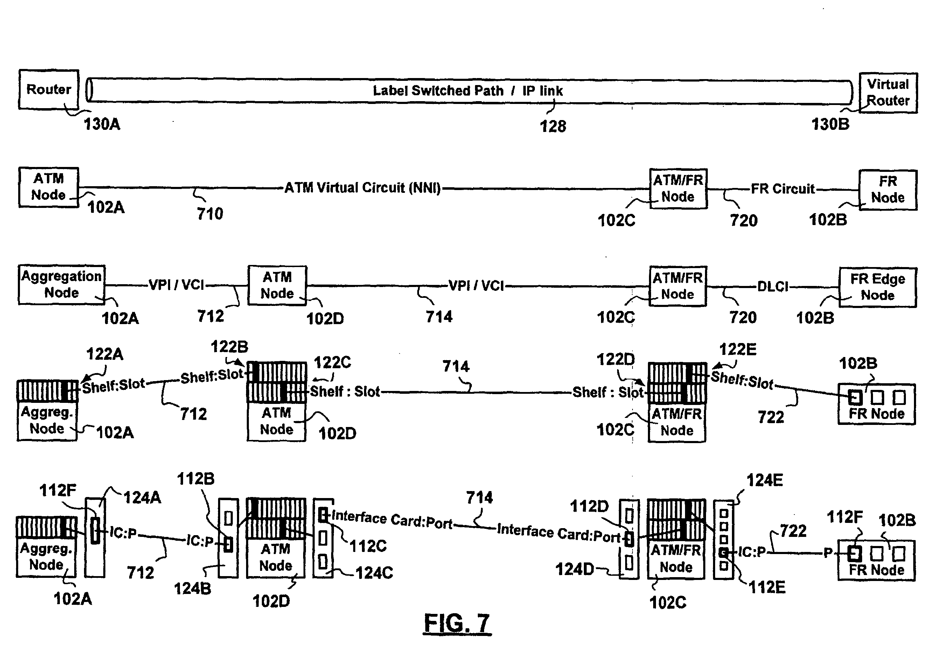

FIG. 7 is a schematic diagram showing, in accordance with another exemplary embodiment of the invention, a progressive representation providing greater detail of connectivity information with respect to a provisioned path. For the purposes of this example, ATM data transport technologies will be referred to in describing the relevant concepts of the invention.

In managing data transport paths 128, an analyst (not shown) interacts with the NMS 140. In accordance with a high level Layer-3 representation of the connectivity information corresponding to a selected data transport path 128, the analyst is provided with a schematic representation thereof showing the data transport path 128 spanned between Routers 130A and 130B.

In managing the data transport path 128, it is important to be able to inspect the underlying data network entities provisioning the data transport path 128. In accordance with the example shown, the data transport path 128 makes use of two data transport technologies and in particular ATM data transport 710 between end node 102A and data transport node 102C. Data network node 102C, a gateway, performs data transfer protocol conversion of the conveyed data to a FR data transport protocol for data transport 720 between node 102C and data network node 102B. This level of information includes OSI Layer-2 specific information relating to the use of the data transport protocols and protocol conversion at node 102C.

In managing the selected data transport path 128, the analyst, by interacting with the NMS 140, may drill-down through the connectivity information associated therewith by interacting with the displayed iconical elements.

For example, further drilling-down through the connectivity information associated with the data transport path 128, the analyst is able to ascertain that the end node 102A is an ATM aggregation node, that the ATM data transport 710 between nodes 102A and 102C has two hops via an intermediary ATM node 102D. Two data links 160 are shown: a fist data link 712 between ATM nodes 102A and 102D, and a second data link 714 between ATM node 102D and the gateway node 102C. The Layer-2 representation includes the Layer-2 configuration information including the VPI/VCI used over the data links 712 and 714.

The data transport 720 between the gateway node 102C and the FR edge node 102B is shown to be provided via a FR data link spanned between the ADM node 102C and the ATM edge node 102B. The Layer-2 representation includes he Layer-2 configuration information including the DLCI used over the data link 722.

Further details of the physical Layer-1 devices used in provisioning the data transport path 128 may be presented including specifications of shelves 122 used and slot specifications corresponding each physical L1 interface. It is important to note that the shelf and slot specifications may only be shown selectively as they are relevant only to specific data transport equipment.

Further drilling-down through the connectivity information interface card 124 and physical port 112 specifications may be displayed. Again, the interface card specification may only be shown selectively as it is relevant only to specific data transport equipment.

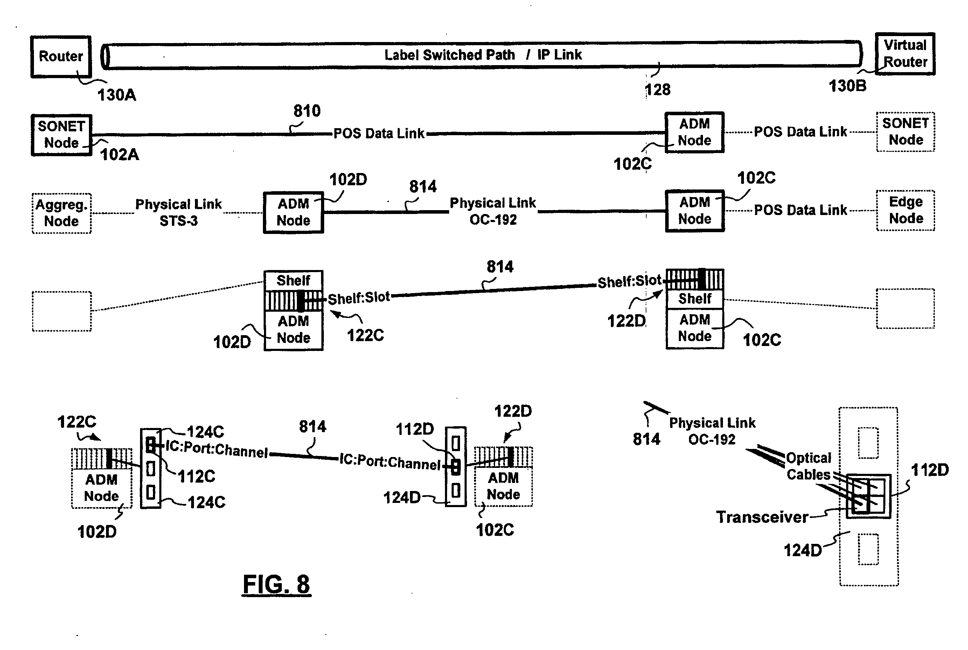

FIG. 8 is a schematic diagram showing a progressive presentation of connectivity information with respect to data transport path 128 in troubleshooting thereof to identify failed equipment. For the purposes of this example, SONET data transport technologies will be referred to in describing the relevant concepts of the invention.

A Layer-3 data transport path 128 spanned between routers 130A and 130B is experiencing a failure. The NMS 140 may signify this fact to the analyst via a visual queues such as special coloring, special purpose shading, special purpose animation, etc. In FIG. 8 the experienced failure is presented via heavy highlight. Upon selecting the data transport path 128, the Layer-2 connectivity information associated therewith is shown.

By inspecting the presented Layer-2 connectivity information, the analyst determines that the failure is associated with SONET data transport between SONET node 102A and Add/Drop Multiplexer (ADM) node 102C over the POS data link 810. In drilling-down further through the Layer-2 connectivity information, the analyst is able to determine that the failure is associated with an OC-192 span 814 between ADM node 102D and the ADM node 102C.

Drilling-down through Layer-1 connectivity information, a shelf 122C on the ADM node 102D and shelf 122D on the ADM node 102C are also shown to be affected by the failure, as well as corresponding slots. The information is presented for visual inspection by the analyst.

Further drilling-down through Layer-1 connectivity information the physical interface cards associated with the physical link 814 namely 124C and 124D, as well as the data ports 112C/112D and corresponding channels.

The troubleshooting session may include drilling-down through Layer-1 the connectivity information where a transceiver associated with an optical cable connected to the data port 112D is shown to experience a failure. The failure may be confirmed perhaps by failing a closed loop test performed on the transceiver.

In accordance with the invention, the drill-down process zeroes-in more and more onto the failed equipment as well as eliminates from the view, properly functioning equipment even though associated with data transport path 128.

The data transport path 128 specifications displayed, may include a data transport capacity and also provide further details with respect a virtual tributary used over a particular SONET span.

In accordance with the invention, the NMS 140 programmed with network management logic enables the analyst to navigate the containment hierarchy or instantiated managed entity objects modeling data transport equipment installed in the field. Selection routines programmed into the network management logic provide for the selective presentation of Layer-3 connectivity information on a human-machine interface 600 associated with the NMS 140. Further selection routines are invoked to progressively expose, and display lower layer connectivity information on demand. The display of connectivity information includes the display of Layer-3 connectivity information in the view pane 610 separate from the display of lower layer connectivity information in the view pane 620.

The embodiments presented are exemplary only and persons skilled in the art would appreciate that variations to the above described embodiments may be made without departing from the scope of the invention. The scope of the invention is solely defined by the appended claims.

## Claims

1. Network management system programmed with a network management logic (140) comprising:
a human-machine interface (600) for display of connectivity information;
**characterised in that** it further comprises
at least two view panes displayed on the human-machine interface (600): a first view pane (610) for adapted to be displaying representations of OSI Layer 3 entities, and a second view pane (620) for displaying representations of OSI Layer 2 entities, the OSI Layer 3 entities being provisioned over the OSI Layer 2 entities so that the combination of the displayed infomation in the at least two view panes provides for presentation of OSI Layer 2 entities corresponding to selected OSI Layer 3 entities.

2. Network management system as claimed in claim 1, wherein the network management system is further adapted to query a managed object database storing connectivity information regarding field installed data transport equipment

3. Network management system as claimed in claim 2, wherein for querying the managed object database, the network management system is further adapted to extract layer-by-layer connectivity information regarding Layer-3 entity representations selected in the first view pane (610) for display in the second view pane (620).

4. Network management system as claimed in any one of claims 1 to 3, wherein the network management system is further adapted to inspect a containment hierarchy of instantiated manageable entity objects modeling field installed data transport equipment specifying connectivity information.

5. Network management system as claimed in claim 4, wherein for invecting the containment hierarchy of instantiated managed entity objects, the network management system is further adapted to extract layer-by-layer connectivity information regarding Layer-3 entity representations selected in the first view pane (610).

6. Network management system as claimed in any one of claims 1 to 5, wherein the first and second view panes (610, 620) are further associated with a one of a segmented view window and two corresponding view windows.

7. Network management software application comprising:
a network management logic (140) whereby when said logic is executed in a computer,
a human-machine interface (600) is caused to display connectivity information;
**characterised in that** when said logic is executed in a computer, at least two view panes are caused to be displayed via the human-machine interface (600); a first view pane (610) for displaying representations of OSI Layer 3 entities, and a second view pane (620) for displaying representations of OSI Layer 2 entities, the OSI Layer 3 entities being provisioned over the OSI Layer 2 entities, so that the combination of the displayed information in the at least two view panes provides for presentation of OSI Layer 2 entities corresponding to selected OSI Layer 3 entities.

8. Network management software application as claimed in calm 7, wherein the network management software application is further adapted to query a managed object database storing connectivity information regarding field installed data transport equipment.

9. Network management system as claimed in claim 8, wherein querying the managed object database, the network management software application is further adapted to extract layer-by-layer connectivity information regarding Layer-3 entity representations selected in the first view pane (610) for display in the second view pane (620).

10. Network management software application as claimed in any one of claims 7 to 9, wherein the network management software application is further adapted to inspect a containment hierarchy of instantiated manageable entity objects modeling field installed data transport equipment specifying connectivity information.

11. Network management software application as claimed in claim 10, wherein for inspecting the containment hierarchy of instantiated manageable entity objects, the network management software application is further adapted to extract layer-by-layer connectivity information regarding Layer-3 entity representations selected in the first view pane (610).

12. Network management software application as claimed in any one of claims 7 to 11, wherein the first and second view panes (610, 620) are further associated with a one of a segmented view window and two corresponding view windows.

## Patentansprüche

1. Netzwerkverwaltungssystem, programmiert mit einer Netzwerkverwaltungslogik (140), mit einer Mensch-Maschine-Schnittstelle (600) zum Anzeigen von Konnektivitätsinformation, **dadurch gekennzeichnet, dass** es ferner wenigstens zwei auf der Mensch-Maschine-Schnittstelle (600) angezeigte Sichtausschnitte umfasst, einen ersten Sichtausschnitt (610) zum Anzeigen von Darstellungen von OSI-Schicht-3-Einheiten und einen zweiten Sichtausschnitt (620) zum Anzeigen von Darstellungen von OSI-Schicht-2-Einheiten, wobei die OSI-Schicht-3-Einheiten über den OSI-Schicht-2-Einheiten vorgesehen sind, so dass die Kombination der angezeigten Information in den wenigstens zwei Sichtausschnitten eine Darstellung von OSI-Schicht-2-Einheiten liefert, die ausgewählten OSI-Schicht-3-Einheiten entsprechen.

2. Netzwerkverwaltungssystem nach Anspruch 1, bei dem das Netzwerkverwaltungssystem ferner eingerichtet ist, eine Datenbank von verwalteten Objekten abzufragen, die Konnektivitätsinformationen betreffend im Feld installierte Datentransporteinrichtungen speichert.

3. Netzwerkverwaltungssystem nach Anspruch 2, bei dem zum Abfragen der Datenbank verwalteter Objekte das Netzwerkverwaltungssystem ferner eingerichtet ist, schichtweise Konnektivitätsinformation betreffend im ersten Sichtausschnitt (610) ausgewählte Schicht-3-Einheitendarstellungen zum Anzeigen in dem zweiten Sichtausschnitt (620) zu extrahieren.

4. Netzwerkverwaltungssystem nach irgendeinem der Ansprüche 1 bis 3, bei dem das Netzwerkverwaltungssystem ferner eingerichtet ist, eine Enthaltenheitshierarchie von instanziierten verwaltbaren Einheitsobjekten zu untersuchen, die Konnektivitätsinformation spezifizierende im Feld installierte Datentransporteinrichtungen modellieren.

5. Netzwerkverwaltungssystem nach Anspruch 4, bei dem zum Untersuchen der Enthaltenheitshierarchie von instanziierten verwalteten Einheitsobjekten das Netzwerkverwaltungssystem ferner eingerichtet ist, schichtweise Konnektivitätsinformation betreffend Schicht-3-Einheitsdarstellungen zu extrahieren, die in dem ersten Sichtausschnitt (610) ausgewählt sind.

6. Netzwerkverwaltungssystem nach einem der Ansprüche 1 bis 5, bei dem der erste und zweite Sichtausschnitt (610, 620) ferner mit entweder einem segmentierten Sichtfenster oder mit zwei entsprechenden Sichtfenstern verknüpft sind.

7. Netzwerkverwaltungssoftwareanwendung mit:
- einer Netzwerkverwaltungslogik (140), wobei, wenn die Logik in einem Computer ausgeführt wird, eine Mensch-Maschine-Schnittstelle (600) veranlasst wird, Konnektivitätsinformation anzuzeigen;
**dadurch gekennzeichnet, dass** wenn die Logik in einem Computer ausgeführt wird, wenigstens zwei Sichtausschnitte veranlasst werden, über die Mensch-Maschine-Schnittstelle angezeigt zu werden, ein erster Sichtausschnitt (610) zum Anzeigen von Darstellungen von OSI-Schicht-3-Einheiten und ein zweiter Sichtausschnitt (620) zum Anzeigen von Darstellungen von OSI-Schicht-2-Einheiten, wobei die OSI-Schicht-3-Einheiten über den OSI-Schicht-2-Einheiten vorgesehen sind, so dass die Kombination der angezeigten Information in den wenigstens zwei Sichtausschnitten eine Darstellung von OSI-Schicht-2-Einheiten liefert, die ausgewählten OSI-Schicht-3-Einheiten entsprechen.

8. Netzwerkverwaltungssoftwareanwendung nach Anspruch 7, bei der die Netzwerkverwaltungssoftwareanwendung ferner eingerichtet ist, eine Datenbank von verwalteten Objekten abzufragen, die Konnektivitätsinformation betreffend im Feld installierte Datentransporteinrichtungen speichert.

9. Netzwerkverwaltungssystem nach Anspruch 8, bei der beim Abfragen der Datenbank verwalteter Objekte die Netzwerkverwaltungssoftwareanwendung ferner eingerichtet ist, schichtweise Konnektivitätsinformation betreffend im ersten Sichtausschnitt (610) ausgewählte Schicht-3-Einheitsdarstellungen zum Anzeigen in dem zweiten Sichtausschnitt (620) auszuwählen.

10. Netzwerkverwaltungssoftwareanwendung nach einem der Ansprüche 7 bis 9, bei der die Netzwerkverwaltungssoftwareanwendung ferner eingerichtet ist, eine Enthaltenheitshierarchie von instanziierten verwaltbaren Einheitsobjekten zu untersuchen, die im Feld installierte Datentransporteinrichtungen modellieren, die Konnektivitätsinformation spezifizieren.

11. Netzwerkverwaltungssoftwareanwendung nach Anspruch 10, bei der zum Untersuchen der Enthaltenheitshierarchie von instanziierten verwaltbaren Einheitsobjekten die Netzwerkverwaltungssoftwareanwendung ferner eingerichtet ist, schichtweise Konnektivitätsinformation betreffend in dem ersten Sichtausschnitt (610) ausgewählte Schicht-3-Einheitsdarstellungen zu extrahieren.

12. Netzwerkverwaltungssoftwareanwendung nach einem der Ansprüche 7 bis 11, bei dem erster und zweiter Sichtausschnitt (610, 620) ferner mit einem segmentierten Sichtfenster oder zwei entsprechenden Sichtfenstern verknüpft sind.

## Revendications

1. Système de gestion de réseau programmé avec :
une logique de gestion de réseau (140) comprenant :
une interface honune-machine (600) pour afficher des informations de connectivité ;
**caractérisé en ce qu'**il comprend en outre :
au moins deux écrans de visualisation adaptés pour être affichés sur l'interface homme-machine (600), un premier écran de visualisation (610) pour afficher des représentations d'entités OSI de couche 3, et un deuxième écran de visualisation (620) pour afficher des représentations d'entités OSI de couche 2, les entités OSI de couche 3 étant disposées par-dessus les entités OSI de couche 2 de telle sorte que la combinaison des informations affichées sur les au moins deux écrans de visualisation offre la présentation d'entités OSI de couche 2 correspondant à des entités OSI de couche 3 sélectionnées.

2. Système de gestion de réseau selon la revendication 1, dans lequel le système de gestion de réseau est adapté par ailleurs pour interroger une base de données objet contenant des relatives à l'équipement de transport de données installé sur le site.

3. Système de gestion de réseau selon la revendication 2, dans lequel, pour interroger une base de données objet, le système de gestion de réseau est adapté par ailleurs pour extraire, couche par couche, des informations de connectivité relatives à des représentations d'une entité de couche 3 sélectionnées dans le premier écran de visualisation (610) pour les afficher sur le deuxième écran de visualisation (620).

4. Système de gestion de réseau selon l'une quelconque des revendications 1 à 3, dans lequel le système de gestion de réseau est adapté par ailleurs pour inspecter une hiérarchie de confinement d'objets d'une entité administrable instanciée modelant l'équipement de transport de données installé sur le site spécifiant des informations de connectivité.

5. Système de gestion de réseau selon la revendication 4, dans lequel, pour inspecter la hiérarchie de confinement d'objets d'une entité administrée instanciée, le système de gestion de réseau est adapté par ailleurs pour extraire, couche par couche, des informations de connectivité relatives à des représentations d'une entité de couche 3 sélectionnées dans le premier écran de visualisation (610).

6. Système de gestion de réseau selon l'une quelconque des revendications 1 à 5, dans lequel les premier et deuxième écrans de visualisation (610, 620) sont associés par ailleurs à une d'une fenêtre à vue segmentée et deux fenêtres de visualisation correspondantes.

7. Application logicielle de gestion de réseau comprenant :
une logique de gestion de réseau (140) ;
moyennant quoi lorsque ladite logique est exécutée sur un ordinateur, une interface homme-machine (600) est amenée à afficher des informations de connectivité ;
**caractérisée en ce que**, lorsque ladite logique est exécutée sur un ordinateur, au moins deux écrans de visualisation sont amenés à être affichés par le biais de l'interface homme-machine (600) : un premier écran de visualisation (610) pour afficher des représentations d'entités OSI de couche 3 et un deuxième écran de visualisation (620) pour afficher des représentations d'entités OSI de couche 2, les entités OSI de couche 3 étant disposées par-dessus les entités OSI de couche 2 de telle sorte que la combinaison des informations affichées sur les au moins deux écrans de visualisation offre une présentation d'entités OSI de couche 2 correspondant à des entités OSI de couche 3 sélectionnées.

8. Application logicielle de gestion de réseau selon la revendication 7, dans laquelle l'application logicielle de gestion de réseau est adaptée par ailleurs pour interroger une base de données objet contenant des relatives à l'équipement de transport de données installé sur le site.

9. Application logicielle de gestion de réseau selon la revendication 8, dans laquelle, pour interroger une base de données objet, l'application logicielle de gestion de réseau est adaptée par ailleurs pour extraire, couche par couche, des informations de connectivité relatives à des représentations d'une entité de couche 3 sélectionnées dans le premier écran de visualisation (610) pour les afficher sur le deuxième écran de visualisation (620).

10. Application logicielle de gestion de réseau selon l'une quelconque des revendications 7 à 9, dans laquelle l'application logicielle de gestion de réseau est adaptée par ailleurs pour inspecter une hiérarchie de confinement d'objets d'une entité administrable instanciée modelant l'équipement de transport de données installé sur le site spécifiant des informations de connectivité.

11. Application logicielle gestion de réseau selon la revendication 10, dans laquelle, pour inspecter la hiérarchie de confinement d'objets d'une entité administrée instanciée, l'application logicielle de gestion de réseau est adaptée par ailleurs pour extraire, couche par couche, des informations de connectivité relatives à des représentations d'une entité de couche 3 sélectionnées dans le premier écran de visualisation (610).

12. Application logicielle de gestion de réseau selon l'une quelconque des revendications 7 à 11, dans laquelle les premier et deuxième écrans de visualisation (610, 620) sont associés par ailleurs à une d'une fenêtre à vue segmentée et deux fenêtres de visualisation correspondantes.
